(19) Europäisches Patentamt / European Patent Office / Office européen des brevets

(11) **EP 3 095 563 B1**

(12) **EUROPEAN PATENT SPECIFICATION**

(45) Date of publication and mention of the grant of the patent:
**26.08.2020  Bulletin 2020/35**

(51) Int Cl.:
**B25J 9/00** *(2006.01)*

(21) Application number: **16167877.6**

(22) Date of filing: **02.05.2016**

(54) **DEVICE FOR THE MOVEMENT AND POSITIONING OF AN OBJECT IN SPACE**

VORRICHTUNG ZUM BEWEGEN UND POSITIONIEREN EINES OBJEKTS IM RAUM

DISPOSITIF POUR LE DÉPLACEMENT ET LE POSITIONNEMENT D'UN OBJET DANS L'ESPACE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **14.05.2015  IT MI20150674**

(43) Date of publication of application:
**23.11.2016  Bulletin 2016/47**

(73) Proprietor: **Euromatic S.r.l.**
**24047 Treviglio (BG) (IT)**

(72) Inventors:
• **GUSMINI, Giorgio**
  **24040 Calvenzano-Bergamo (IT)**
• **GABRIELLI, Andrea**
  **60124 Ancona (IT)**

(74) Representative: **Giuli, Maurizio Mario Galdino et al**
**Franco Martegani S.r.l.**
**Via Carlo Alberto, 41**
**20900 Monza (MB) (IT)**

(56) References cited:
**EP-A1- 1 365 893     EP-A1- 1 492 649**
**US-B2- 7 331 750**

## Description

The present invention relates to a device for the movement and positioning of an object in space with a minimum encumbrance and high work volume.

Various solutions of devices are currently known in in the field of the manipulation of objects in a three-dimensional space, for moving and positioning said objects.

These devices must frequently be associated with other devices that form a production line requiring a wide manoeuvring possibility.

One of these devices is disclosed, for example, by patent US 4,976,582.

The device of the patent has, among its features, a parallel structure which allows reduced positioning errors thanks to the presence of closed kinematic chains.

In said device, the motors of the various arms are mounted on a frame and, if on the one hand the inertias involved are extremely low, the velocities and accelerations that can be reached with it can, on the other hand, be extremely high.

In this device, three arms are envisaged, positioned at 120 degrees with respect to each other, which guarantee a work volume with extremely high kinematic and dynamic performances and a well-balanced overall behaviour of both the various arms and also the mechanical parts forming them.

On examining the structure of the device, it can be observed that the mechanical structure is not particularly complex. It can also be seen that the bars present on the forearm work as struts/tie-rods and consequently, if they have reduced masses, they are mainly subject to axial loads. In this way, by modifying the length of the bars, the workspace and encumbrance are modified without any particular complexity.

With respect to this device for the movement and positioning of an object in space, it can also be observed that it has a reduced workspace with respect to large overall dimensions, also bearing in mind that the area inside the device cannot be used.

Furthermore, it can be observed that the mechanical design of such a device implies particular attention with respect to the passive joints. For its implementation, in fact, not only are elementary couples used, but also spherical pairs, and this entails the management of the rotations of the same and friction.

Other types of manipulating devices are also known, such as that of patent US 7,331,750 which, although having an ampler workspace with respect to the encumbrance compared with the known device indicated above, also have general problems.

In these devices, for example, the lateral translation is always coupled with the rotation.

Furthermore, bending and twisting moments are generated on the upper arm of said manipulating device, which make its design more complex and the power flow passes through the end-effector and then returns, through the upper arm, to the support of the motor of the same.

The device has a limited reconfigurability as it is not sufficient to modify the length of the bars for modifying the workspace. The structure of the upper arm must in fact be re-designed as parallelograms. Thus there is a need for a device having a parallel architecture, that is primarily easy to manage, also when incorporated to collaborate and interact with other high-speed devices, and can have an ample workspace with respect to the overall dimensions, even having an essentially uncomplicated structure.

EP 1365893 discloses a device for the movement and positioning of an object in space, comprising a base element, a movable element, three articulated composite arms assembled by means of joints, which arms connect said base element and said movable element by means of further joints, three rotational actuators each of which is operatively connected to activate one of said three arms, said three arms being arranged so that two first arms oscillate in a plane orthogonal to a plane in which the third arm oscillates, the third arm and its associated actuator being rotatingly supported with respect to said base element by a support.

In addition, the known device comprises a differential articulated rod mechanism that ensures that the third arm is always situated midway between the two first arms or at least in a position with a constant angular ratio between the two first arms.

In view of these examples of known solutions, a general objective of the present invention is to develop a device having at least two degrees of freedom for the movement and positioning of an object in space which has an extremely simple and functional structure, even having an extremely ample workspace.

A further objective of the present invention is to find a device for the movement and positioning of an object in space, which has a limited encumbrance, also with particular reference to the volume of the engine group, compared with the workspace.

Another objective of the present invention is to find a device for the movement and positioning of an object in space, that is capable of handling movement tasks with high dynamic performances in order to adapt itself to increasingly demanding production requirements.

Yet another objective of the present invention is to find a device for the movement and positioning of an object in space, that can offer a high degree of reconfigurability, adapting itself to the work volume, type of movement and number of degrees of freedom required for each specific manipulation/movement task in a production line, and that can always guarantee an optimum balancing of the loads on the structure.

A further objective of the present invention is to find a device for the movement and positioning of an object in space, that can solve the drawbacks of the known art described above in an extremely simple, economical and particularly functional manner.

In view of the above objectives, according to the present invention, a device for the movement and positioning of an object in space has been conceived, having the characteristics specified in the enclosed claims.

The structural and functional characteristics of the present invention and its advantages with respect to the known art will appear even more evident from the following description, referring to the enclosed drawings, which, *inter alia,* show an illustrative and non-limiting embodiment, of a device for the movement and positioning of an object in space produced according to the same invention.

In the drawings:

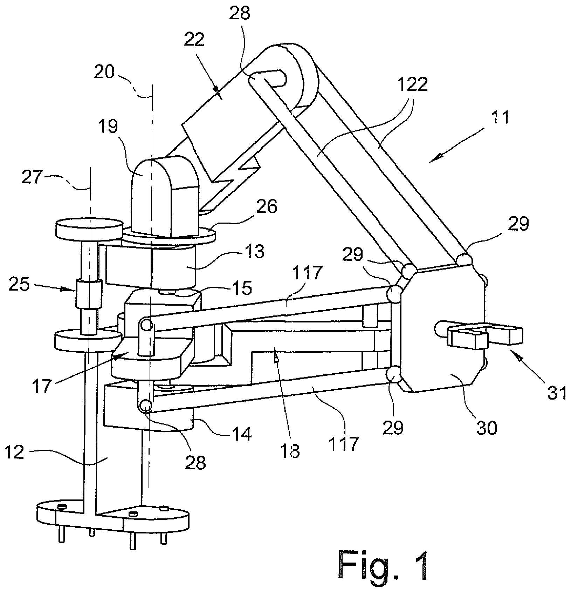

- figure 1 is a schematic perspective view of a device according to the invention according to a first observation point in space;

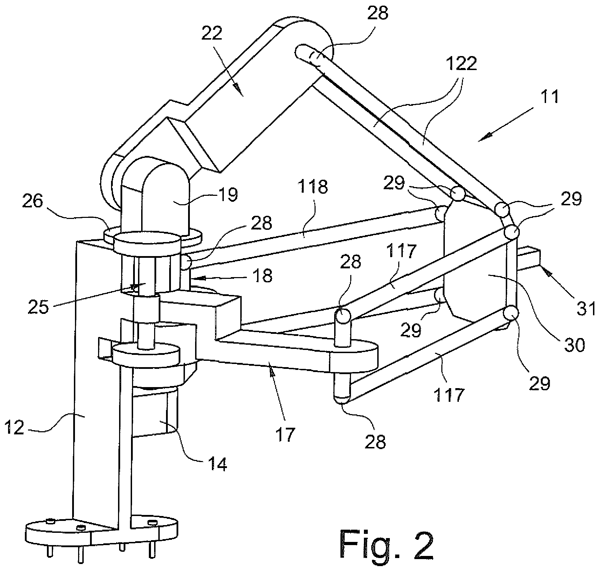

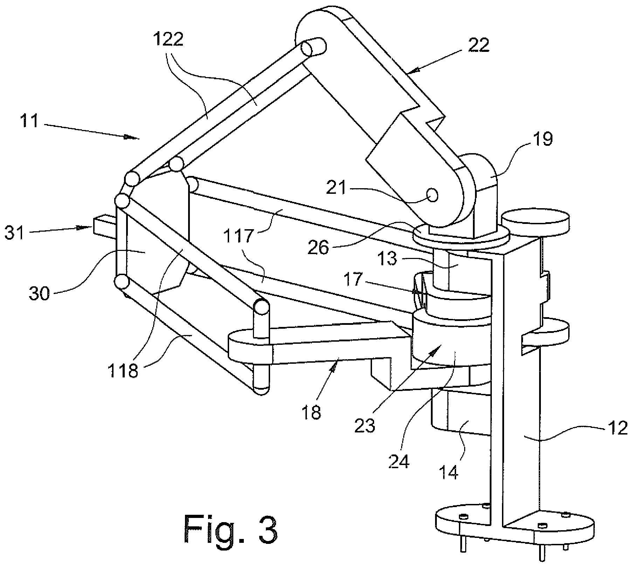

- figures 2 and 3 show perspective views of the device of figure 1 according to two different observation points in space to enhance the understanding of its configuration;
- figure 4 is a perspective view deriving from figure 1 of the device without its arms in order to allow greater clarity with respect to the positions and relations between the motors and differential forming it;
- figure 5 is a block scheme showing the essential parts illustrated in figure 4.

With reference to the figures, these illustrate an embodiment of a device for the movement and positioning of an object in space produced according to the invention, otherwise also known as "robot".

The figures schematically show a device or robot 11 positioned on a frame 12, also defined as base element, which is fixed in a point of a generic production line for manipulating objects produced therein (not shown).

A pair of actuators, such as motors 13 and 14, are rigidly mounted on the base element 12, in the example schematized in the form of an upright. The motors carry and move respective arms 17 and 18 fitted on respective output shafts 15 and 16. A third actuator or motor 19 is hinged to the base element 12 and can rotate around an axis 20. The third motor 19 carries a third arm 22 fitted on a respective shaft 21.

The shafts 15 and 16 of the first two motors 13 and 14 are arranged on the same axis 20 which is also the rotation axis of the third motor 19.

According to the invention, the first two motors 13 and 14, in addition to directly moving the arms 17 and 18 fitted on the respective shafts 15 and 16, also move a differential 23.

In the configuration illustrated, it can also be observed how the differential 23 has two inputs and an output. It is understood that in other embodiments, not shown, there may be at least two inputs and at least one output. In particular, the configuration of the differential 23 is such that the velocity of an output shaft, represented in the embodiment illustrated by an outer surface 24 of the differential 23, always has a value equal to the average value of the velocity of the input shafts 15 and 16. In this example, the transmission ratio is given by the Willis formula

$$(\tau = (\omega_{15} - \omega_{24}) / (\omega_{16} - \omega_{24})$$

said formula having been re-adapted to the case in question wherein the values $\omega$ refer to the input and output velocities) equal to -1.

Again in the example illustrated, the outer surface 24 of the differential 23 through a transmission system, indicated as a whole with 25, with an axis 27 parallel in this example to the axis 20 indicated above, transfers the movement with a unitary transmission ratio from the output of the differential 23 to a support 26 of the third motor 19, orienting the same around the same axis 20.

In this way, the position of the output shaft of the differential 23, i.e. in this case the outer surface 24 of the differential 23, is such as to maintain a plane (within or on which the third arm 22 lies) orthogonal to the shaft 21 at the output of the third motor 19, always oriented according to a bisector of the first two arms 17 and 18.

In this way, the device or robot 11 always operates on its sagittal plane.

It should be noted that, in the non-limiting solution illustrated, the device or robot has an isostatic structure.

In particular, in a schematic embodiment of this device, the architecture of the single arm resembles that of the device illustrated in patent US 4,976,582.

It can be observed, in fact, that a motorized rotoidal joint positioned between the single motor 13 or 14 or 19 and the single arm 17 or 18 or 22 is followed, along the chain at ends of rod extensions 117 or 118 or 122 of the single arm 17 or 18 or 22, by two universal joints 28 and two ball joints 29 (and these four joints form a quadrangle).

The ball joints 29, moreover, support a movable element 30, such as a plate, where there is a working element, schematized in 31, such as a device for orientation with n degrees of freedom (see robotic wrist) or directly a gripping element.

According to the present invention, therefore, a differential 23 is inserted, with two inputs and one output, in the architecture of a parallel tripod device or robot, to allow a motion (cylindrical) and an ample workspace. The arrangement of the differential allows the management of a power flow which follows the kinematic structure from the engine group 13, 14 and 19 to the movable element of platform 30, consequently without turning back.

In the arrangement illustrated for illustrative purposes, a tripod device or robot is schematically outlined, with two arms 17 and 18 parallel to the ground (and with the same axis of the actuated joint) and a third vertical arm 22.

In an embodiment, the differential can be basically a planetary train with two inputs and one output. The solars, crowns or gear carriers can be taken indifferently as inputs or outputs and the differential can have any configuration. In any case, in order to guarantee high rotations of the device or robot, in order to avoid impact between the third upper arm 22 and the two lower arms 17 and 18, the output must rotate by an angle equal to half of the value of the input angles. This allows the third arm 22 to be arranged on an intermediate sagittal plane between the other two arms 17, 18, i.e. on a bisector.

As already indicated, in order to ensure that this condition also be maintained for important rotations around the vertical axis, resort is preferably made to a differential (planetary train) with a transmission ratio having a value as close as possible to -1 (see Willis formula).

In the preferred, but non-limiting, solution illustrated, the two motors 13 and 14 of the shafts 15 and 16 relating to the first two arms 17 and 18, are mounted on the base element 12 and aligned or connected so as to reach the inputs of the differential. The support 26 of the third motor 19 carrying the respective third arm 22 is connected to the output of the differential 23, for example as previously illustrated. The motor 19 of the third arm 22 is consequently fixed to the supporting structure 26 so as to rotate with the differential 23.

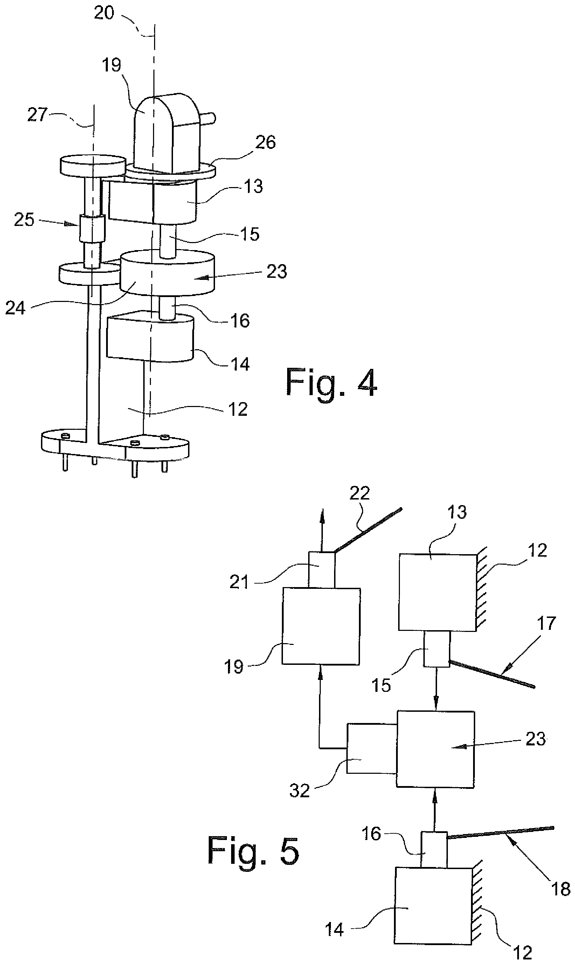

In the solution according to the present invention, in a block scheme of figure 5, a further embodiment is shown, in which an engagement connection 32 is interposed between the differential 23 and the transmission 25 to the third motor 19 (but generally it could be at any point between the inputs of the differential and the support 26), for allowing a differentiated functioning of the device.

The presence of said engagement connection 32 allows the disengagement of the differential 23 in a certain configuration of the device or robot of the invention and the contemporaneous fixing of the support 26 of the third motor 19. This allows the device or robot 11 to change kinematics and act as a classical tripod fixed to a base element, analogously to the device called Delta for pure translation (whose architecture is disclosed in the above-mentioned patent US 4,976,582), with a consequent fixing of the orientation and loss of rotation generated by the cylindrical motion.

In this arrangement, unlike the classical device called Delta, the axes of the arms 17 and 18 remain aligned. In order to return to the "cylindrical" kinematics previously illustrated, before re-activating the engagement connection 32, the upper arm 22 must be returned halfway between the other two arms 17 and 18.

In the solution according to the present invention, in line with what is indicated in the description of the engagement device, maximum attention is paid to the modularity and reconfigurability concepts of the "robot" to ensure that the same is capable of adapting itself to the requirements of the production line in which it is inserted. In particular, there is the possibility of providing functional modules/groups that can be combined in different configurations with two or three degrees of freedom.

By removing the arm 22 with the relative motor 19 and relative extensions 122, for example, and substituting the differential 23 with a passive arm suitably constrained to the base element 12 and to the movable element 30, the "robot" can be configured so as to make it only available for movements with two degrees of freedom.

With this arrangement according to the invention, as previously described, a tripod structure of a device or robot can be provided with motors mounted on the base element (except for the motor of the third arm which is rotated by the differential around its axis). Even if the arms are not at 120 degrees, they can guarantee a work volume with extremely high kinematic and dynamic performances and a well-balanced behaviour of the various arms in addition to the mechanical parts forming them.

It should also be pointed out that an active engagement implies always operating on a sagittal plane. On this plane, the device or robot of the invention is capable of offering the best performances from a cinetostatic-dynamic point of view. Furthermore, with an active engagement, the workspace is extremely wide as the working area obtained on the sagittal plane (the vertical plane halfway between the two outer arms) is projected by revolution around the central column.

According to the invention, moreover, there is a minimum encumbrance with respect to the workspace. The imprint of the engine group is small compared with the workspace (with particular motors, see those with a hollow shaft, the whole unit can be mounted on a central column with an axis 20, ensuring rotations of the robot greater than 360 degrees).

As previously indicated, the power flow passes exclusively from the base element towards the movable element or movable platform and does not return.

The mechanical design is particularly simplified as the design of the bars 117, 118 and 122 on the forearms is simple as struts/tie-rods are used (mainly an axial load in the case of extremely reduced masses of the same).

A device according to the present invention can have numerous uses such as a device for pick&place operations, and an assembly or processing device.

It can be inserted within an island and interact with various stations at extremely high velocities.

It can also offer a high degree of modularity and reconfigurability, adapting itself to the work volume, the type of movement and number of degrees of freedom (two or three) required for each specific handling/movement task.

It should also be noted that the device according to the present invention is particularly suitable as a positioning device. It should be pointed out, however, that when moving an object tangentially, its orientation also varies. By rotating around its axis, in fact, the device rotates and the object being manipulated rotates with it. In the embodiment previously illustrated, the orientation of the device or robot is influenced by its positioning, however in a possible implementation, a wrist can be added downstream, on the movable element or platform, to allow the orientation to be independent of the positioning.

The objective mentioned in the preamble of the description has therefore been achieved.

The forms of the structure for the production of a device according to the invention, as also the materials and assembly modes, can naturally differ from those shown for purely illustrative and non-limiting purposes in the drawings , without departing from the protection scope of the invention as defined by the enclosed claims.

## Claims

1. A device for the movement and positioning of an object in space comprising a base element (12), a movable element (30), three articulated composite arms (17, 117; 18, 118; 22, 122) assembled by means of joints (28), which arms connect said base element (12) and said movable element (30) by means of further joints, three rotational actuators (13, 14, 19) each of which is operatively connected to activate one of said three arms (17, 117; 18, 118; 22, 122), said arms being arranged so that two first arms (17, 117; 18, 118) oscillate in a plane orthogonal to a plane in which the third arm (22, 122) oscillates, said third arm and its associated actuator (19) being rotatingly supported with respect to said base element (12) by a support (26), the device further comprising a differential (23) provided with two inputs (15,16) and one output (24) and arranged so as to operate between said three actuators (13, 14, 19), wherein each input is connected to a respective actuator of said two first arms and the output is connected to said support (26) by means of a transmission (25).

2. The device according to claim 1, **characterized in that** an engagement/disengagement (32) is interposed between two actuators (13 and 14) and said third actuator (19), which blocks the support (26) and releases the transmission (25) and/or the inputs (15 and 16) and/or the output (24) of the differential (23), modifying the architecture/kinematics of the device and obtaining a pure translation movement for the movable element (30).

3. The device according to claim 1 or 2, **characterized in that** said joints through which said three composite arms (17, 117; 18, 118; 22, 122) are articulated, are universal/ball joints (28, 29).

4. The device according to one or more of the previous claims, **characterized in that** said joints positioned between said base element (12) and said movable element (30) are implemented pivot joints (15, 16, 21) and ball/universal joints (28, 29), respectively.

5. The device according to one or more of the previous claims, **characterized in that** the output of the differential comprises an outer surface (24) of the differential (23).

## Patentansprüche

1. Vorrichtung zum Bewegen und Positionieren eines Objekts im Raum, umfassend ein Basiselement (12), ein bewegliches Element (30), drei zusammengesetzte Gelenkarme (17, 117; 18, 118; 22, 122), die über Gelenke (28) verbunden sind, wobei die Arme das Basiselement (12) und das bewegliche Element (30) über weitere Gelenke verbinden, drei Rotationsstellglieder (13, 14, 19), von denen jedes funktionsmäßig angeschlossen ist und so einen der drei Arme (17, 117; 18, 118; 22, 122) ansteuert, wobei die Arme so angeordnet sind, dass sich zwei erste Arme (17, 117; 18, 118) in einer Ebene senkrecht zu einer Ebene hin- und herbewegen, in der sich der dritte Arm (22, 122) hin- und herbewegt, wobei der dritte Arm und sein zugehöriges Stellglied (19) bezogen auf das Basiselement (12) von einem Träger (26) drehend gehalten werden, wobei die Vorrichtung ferner ein Differential (23) umfasst, das mit zwei Antrieben (15, 16) und einem Abtrieb (24) versehen und so angeordnet ist, dass es zwischen den drei Stellgliedern (13, 14, 19) arbeitet, wobei jeder Antrieb mit einem jeweiligen Stellglied der beiden ersten Arme verbunden ist und der Abtrieb mit dem Träger (26) über ein Getriebe (25) verbunden ist.

2. Vorrichtung nach Anspruch 1, **dadurch gekennzeichnet, dass** zwischen zwei Stellgliedern (13 und 14) und dem dritten Stellglied (19) eine Kontakt-/Trennvorrichtung (32) angeordnet ist, die den Träger (26) feststellt und das Getriebe (25) und/oder die Antriebe (15 und 16) und/oder den Abtrieb (24) des Differentials (23) freigibt und so die Architektur/Kinematik der Vorrichtung abwandelt und für das bewegliche Element (30) eine reine Translationsbewegung erhält.

3. Vorrichtung nach Anspruch 1 oder 2, **dadurch gekennzeichnet, dass** die Gelenke, über welche die drei zusammengesetzten Arme (17, 117; 18, 118; 22, 122) gelenkig verbunden sind, Kreuz-/Kugelgelenke (28, 29) sind.

4. Vorrichtung nach einem oder mehreren der vorhergehenden Ansprüche, **dadurch gekennzeichnet,**

**dass** die zwischen dem Basiselement (12) und dem beweglichen Element (30) platzierten Gelenke als Drehgelenke (15, 16, 21) beziehungsweise als Kugel-/Kreuzgelenke (28, 29) ausgeführt sind.

5. Vorrichtung nach einem oder mehreren der vorhergehenden Ansprüche, **dadurch gekennzeichnet, dass** der Abtrieb des Differentials eine Außenfläche (24) des Differentials (23) umfasst.

**Revendications**

1. Dispositif pour le déplacement et le positionnement d'un objet dans l'espace comprenant un élément de base (12), un élément mobile (30), trois bras composites articulés (17, 117; 18, 118; 22, 122) assemblés à l'aide de raccords (28), lesquels bras relient ledit élément de base (12) et ledit élément mobile (30) à l'aide d'autres raccords, trois actionneurs rotatifs (13, 14, 19) dont chacun est fonctionnellement relié pour activer l'un desdits trois bras (17, 117 ; 18, 118 ; 22, 122), lesdits bras étant agencés de telle sorte que deux premiers bras (17, 117 ; 18, 118) oscillent dans un plan orthogonal à un plan dans lequel le troisième bras (22, 122) oscille, ledit troisième bras et son actionneur (19) associé étant supportés de manière rotative par rapport audit élément de base (12) par un support (26), le dispositif comprenant en outre un différentiel (23) pourvu de deux entrées (15, 16) et d'une sortie (24) et agencé de manière à fonctionner entre lesdits trois actionneurs (13, 14, 19), dans lequel chaque entrée est reliée à un actionneur respectif desdits deux premiers bras et la sortie est reliée audit support (26) à l'aide d'une transmission (25).

2. Dispositif selon la revendication 1, **caractérisé en ce qu'**un élément de mise en prise/désolidarisation (32) est interposé entre deux actionneurs (13 et 14) et ledit troisième actionneur (19), qui bloque le support (26) et libère la transmission (25) et/ou les entrées (15 et 16) et/ou la sortie (24) du différentiel (23), modifiant l'architecture/la cinématique du dispositif et obtenant un déplacement de translation pur pour l'élément mobile (30).

3. Dispositif selon la revendication 1 ou 2, **caractérisé en ce que** lesdits raccords par l'intermédiaire desquels lesdits trois bras composites (17, 117 ; 18, 118 ; 22, 122) sont articulés, sont des raccords universels/à rotule (28, 29).

4. Dispositif selon une ou plusieurs des revendications précédentes, **caractérisé en ce que** lesdits raccords positionnés entre ledit élément de base (12) et ledit élément mobile (30) sont respectivement mis en œuvre par des raccords à pivot (15, 16, 21) et des raccords à rotule/universels (28, 29).

5. Dispositif selon une ou plusieurs des revendications précédentes, **caractérisé en ce que** la sortie du différentiel comprend une surface extérieure (24) du différentiel (23).

Fig. 1

Fig. 2

Fig. 3

EP 3 095 563 B1

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4976582 A
- US 7331750 B
- EP 1365893 A